# EUROPEAN PATENT APPLICATION

(11) **EP 1 387 096 A1**
(43) Date of publication of application: **04.02.2004**
(21) Application number: 02720506.1
(22) Date of filing: 18.04.2002
(51) Int. Cl.: F16C 13/00

(54) **TUBULAR JACKET FOR SHOE PRESS ROLL**

(30) Priority: 07.05.2001 JP 2001136160; 10.07.2001 JP 2001209345
(71) Applicant: Yamauchi Corporation, Hirakata-shi, Osaka 573-1132 (JP)
(72) Inventor: HIKITA, Takahisa, c/o YAMAUCHI CORPORATION, Hirakata-shi, Osaka 573-1132 (JP); NAKAGAWA, Keiji, c/o YAMAUCHI CORPORATION, Hirakata-shi, Osaka 573-1132 (JP); WATANABE, Atsuo, c/o YAMAUCHI CORPORATION, Hirakata-shi, Osaka 573-1132 (JP); WATANABE, Atsushi, c/o YAMAUCHI CORPORATION, Hirakata-shi, Osaka 573-1132 (JP)
(74) Representative: Hoffmann, Jörg Peter, Dr. Ing.
(86) International application number: PCT/JP2002/003896
(87) International publication number: WO 2002/090788

(57) **Abstract**

A cylindrical jacket (10) for a shoe press roll of the present invention is used with opposing end portions bent radially inward. At a position of a bent portion (B) at opposing ends of jacket (10) which is apart from an edge (14), a positioning hole (12) for fixing attachment position of the jacket (10) and a punched hole (13) for absorbing crease of the bent portion (B) are provided.

## Description

### Technical Field

The present invention relates to a shoe press apparatus of a paper making machine for compressing and removing water from a web of fiber material. More specifically, the present invention relates to a cylindrical jacket for a shoe press roll mounted on an outer circumferential surface of the shoe press roll.

### Background Art

A shoe press apparatus for removing water from the web of fiber material is provided with a shoe press roll having a rolling function. A cylindrical jacket (blanket) is mounted as a cover member, on the shoe press roll.

Typically, a multi-woven foundation fabric (woven fabric) impregnated with/covered by urethane resin or the like from front and rear surfaces is used as the cylindrical jacket. The cylindrical jacket rotates together with the shoe press roll. At that time, it is necessary that the jacket rotates without flapping. The cylindrical jacket, however, is formed of a soft material, and hence flapping is likely particularly in a high speed machine.

In order to enable rotation of the cylindrical jacket while suppressing flapping, it is important to make uniform the tension in the axial direction of the cylindrical jacket. Accordingly, manufacturers of the apparatus have made attempts to make the tension uniform, by adopting various methods of fixing end portions of the cylindrical jacket.

In a press roll disclosed in Japanese Patent Publication No. 50-12001, an edge of a cylindrical jacket bent radially inward and a ring fitted on the roll shaft are tied by a plurality of tension springs arranged at equal interval in the circumferential direction, so as to make uniform the tension in the axial direction acting on the cylindrical jacket.

In a press apparatus for a paper machine disclosed in Japanese Patent Laying-Open No. 10-158987, a tube that is in contact with an inner circumferential surface of the jacket is arranged near an edge of the fixed cylindrical jacket, and the tube is filled with a compressed air of a prescribed pressure.

In a press roll disclosed in Japanese Patent Publication No. 2-53543, an end portion of the jacket is bent radially inward along a side surface of a disk arranged inside the end portion of the cylindrical jacket, and the bent end portion is fixed on the disk by means of a fixing pin or the like.

Conventional apparatuses described above each have advantages and disadvantages. The apparatus disclosed in Japanese Publication No. 2-53543, however, seems to be most effective from the past experience. This prior art, however, still has a problem to be solved.

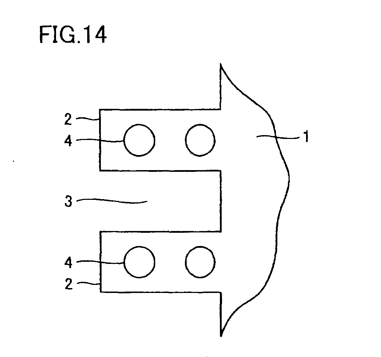

When a structure is adapted in which an end portion of the cylindrical jacket is bent radially inward and fixed on a disk, it is a typical practice to form a number of tongues 2 and cutouts 3 alternately at the edge of cylindrical jacket 1 as shown in Fig. 14. A hole 4 for inserting a fixing pin is provided at each tongue 2.

The tongues 2 and cutouts 3 are provided on the cylindrical jacket from the following reason. When there is no cutout at the edge of the cylindrical jacket, there would be creases (distortion caused by reduction in diameter) from the bent portion to the edge, when the end portion of the jacket is bent radially inward. Such creases make it difficult to fix the jacket on the disk, and decrease sealing property between the jacket and a side surface of the disk. Tongues 2 and cutouts 3 perform an important function to avoid such problems.

In order to make uniform the tension in the axial direction of the cylindrical jacket, it is necessary to form a large number of tongues 2 (for example, 24 to 72 tongues on one end portion of the jacket,) each having a hole 4 for inserting a fixing pin. Typically, tongue 2 is manufactured by performing a process of cutting an edge portion of jacket 1. The cutting process is an operation that requires time and labor for a manufacturer of the jacket. As the number of tongues 2 increases, the time necessary for processing increases, decreasing efficiency of production.

The cylindrical jacket for a shoe press roll is huge, having the length of about 8m and the diameter of about 80 cm, for example, and it is heavy. Therefore, when the cylindrical jacket is mounted on the press roll, generally, ropes are inserted through the holes 4 of jacket tongues 2, and the ropes are pulled while the jacket is drawn over the apparatus, so as to facilitate installation of the jacket. Drawing for mounting the jacket is done by manpower of workers (for example, 8 workers), and it is possible that the tongue 2 is torn when pulled with force while drawing.

As the tongue 2 is an indispensable portion for fixing the jacket on the disk, it becomes impossible to mount the jacket on the press roll when the tongue 2 is torn. Therefore, the drawing operation with ropes inserted through the holes 4 of tongues 2 is not preferable.

When the cylindrical jacket is mounted on the press roll, positional deviation of the jacket is often adjusted manually. At that time, an operator adjusts positional deviation while holding the tongue with his/her hand. As adjacent tongues 2 exist independently, separated by cutout 3, it is difficult to move the jacket as a whole, while holding the tongue 2 by ones hand.

As the cylindrical jacket has certain hardness, it is possible that the tongue 2 may accidentally scratch and damage articles therearound or operators, when the jacket is conveyed or mounted on the press roll.

### Disclosure of the Invention

Therefore, an object of the present invention is to provide a cylindrical jacket having such a structure that does not affect fixing of the cylindrical jacket even when the cylindrical jacket is drawn over and mounted on the press roll with large force.

Another object of the present invention is to provide a cylindrical jacket having sufficient strength to prevent tearing or damage when it is mounted on the press roll.

A still further object of the present invention is to provide a cylindrical jacket that can effectively absorb creases at the end portion bent radially inward.

A still further object of the present invention is to provide a cylindrical jacket of which edge zone can be easily processed.

A still further object of the present invention is to provide a cylindrical jacket that readily allows an operation for adjusting positional deviation, when mounted on the press roll.

A still further object of the present invention is to provide a cylindrical jacket that will not damage articles therearound or operator thereof, when the jacket is conveyed or mounted on a press roll.

The present invention provides a cylindrical jacket for a shoe press roll used with opposing end portions bent radially inward, characterized in that a positioning hole for fixing a position of mounting the jacket and a punched hole for absorbing a crease at the bent portion are provided at a position of the bent portion of the opposing ends apart from an edge.

When the end portion of the cylindrical jacket is bent radially inward, there is generated a crease. The crease, however, is absorbed by the punched hole, and therefore fixing and sealing properties between the jacket and the disk side surface are not degraded.

When the cylindrical jacket is mounted over the press roll, it is possible to draw while inserting ropes through the punched holes. Even if a punched hole should be torn by excessive force, the positioning hole is not damaged, and therefore there is no undesirable influence on the fixing of the cylindrical jacket.

As the edge of the cylindrical jacket extends continuously in the circumferential direction without any cutout, it exhibits superior strength against tearing, when the jacket is pulled with ropes inserted through the punched holes.

As the edge of the cylindrical jacket extends continuously in the circumferential direction without any cutout, when the cylindrical jacket is mounted on the press roll, it is possible for an operator to hold the edge zone of the jacket with his/her fingers inserted through the punched holes and to easily move the overall jacket. This facilitates the operation of adjusting positional deviation.

At the edge of the cylindrical jacket extends continuously in the circumferential direction without any cutout, there is no possibility that the end portion scratches and damages articles therearound or operators, when the cylindrical jacket is conveyed or mounted on the press roll.

Further, both the positioning hole and the punched hole can be formed by punching using a punching blade or the like. Therefore, the process can be simplified and the time necessary for the process can be reduced.

In order to reduce generation of creases at the bent portion of the cylindrical jacket, preferably, the thickness of the bent portion is made smaller than the thickness of the cylindrical portion which is not bent. Alternatively, the bent portion may be made softer than the cylindrical portion.

Further, at the bent portion of the cylindrical jacket, the thickness of the edge zone from the edge to the punched hole is made smaller than other portions. Alternatively, the edge zone is made softer than other portions.

In order to facilitate the operation of drawing the cylindrical jacket using ropes, it is preferable to provide a plurality of punched holes at equal interval along the circumferential direction of the jacket. Further, in order to make uniform the tension acting in the axial direction of the cylindrical jacket after mounting, it is preferred that a plurality of positioning holes are provided at equal interval along the circumferential direction of the jacket. Preferably, the punched holes and the positioning holes are positioned alternately along the circumferential direction.

In the state where the cylindrical jacket is mounted on the press roll, the edge zone from the edge to the punched hole of the jacket comes to have a wavy shape because of reduction in diameter when bent. Even when the edge zone from the edge to the punched hole of the jacket comes to have a wavy shape, generally there is no functional problem. When the wave at the edge zone possibly causes any trouble in mounting the cylindrical jacket, it is preferred that a slit extending in the circumferential direction of the jacket is provided at a portion on the side of the jacket edge of the punched hole, or the portion on the jacket edge side of the punched hole is extended wider in the circumferential direction. When the punched hole is adapted to have such shapes, the waving of the edge zone when the end portion of the cylindrical jacket is bent can be suppressed.

### Brief Description of the Drawings

Fig. 1 is a front view of a cylindrical jacket.
Fig. 2 is a cross sectional view representing a structure for attaching an end portion of the cylindrical jacket.
Fig. 3 shows a structure for fastening the end portion viewed from an end portion along the axial direction of the cylindrical jacket.
Fig. 4 shows a bent portion of the cylindrical jacket.
Fig. 5 is a cross sectional view taken along the line V-V of Fig. 4, showing variation in thickness of cylindrical jacket.
Fig. 6 shows a cross sectional structure of the cylindrical jacket.
Fig. 7 shows a foundation fabric impregnated with resin.
Fig. 8 shows another example of the bent portion of the cylindrical jacket.
Fig. 9 shows a further example of the bent portion of the cylindrical jacket.
Fig. 10 shows a still further example of the bent portion of the cylindrical jacket.
Fig. 11 shows a still further example of the bent portion of the cylindrical jacket.
Fig. 12 shows a still further example of the bent portion of the cylindrical jacket.
Fig. 13 shows a still further example of the bent portion of the cylindrical jacket.
Fig. 14 shows a bent portion of a conventional cylindrical jacket.

### Best Modes for Carrying Out the Invention

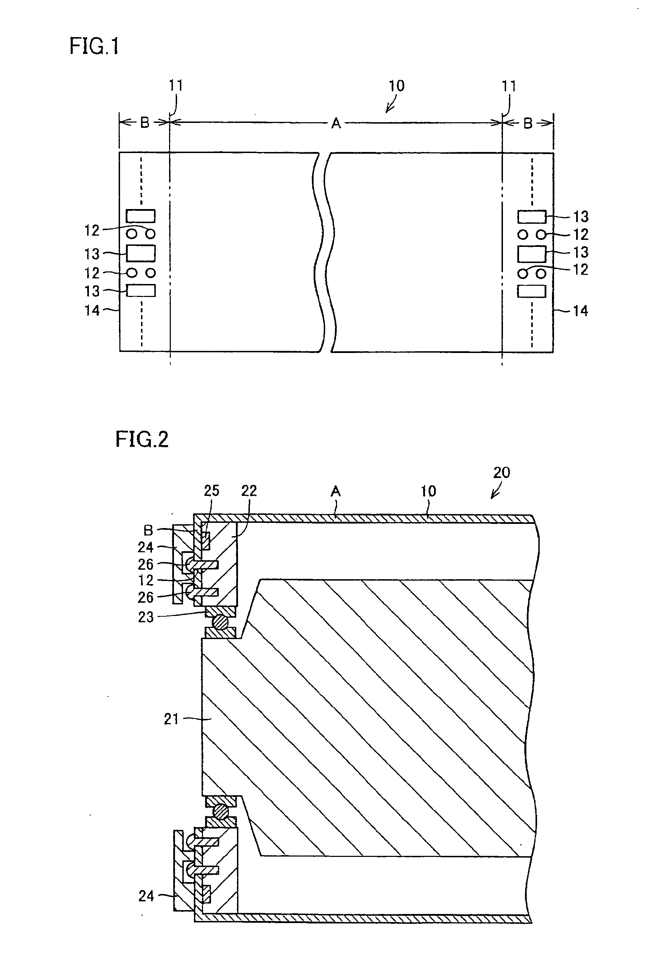

Fig. 1 shows a cylindrical jacket in accordance with an embodiment of the present invention. When a cylindrical jacket 10 is mounted on a shoe press roll, opposing end portions B are used bent radially inward. In the figure, reference numeral 11 denotes a folding line, B denotes bent portions at opposing ends, and A denotes the cylindrical portion which is not bent.

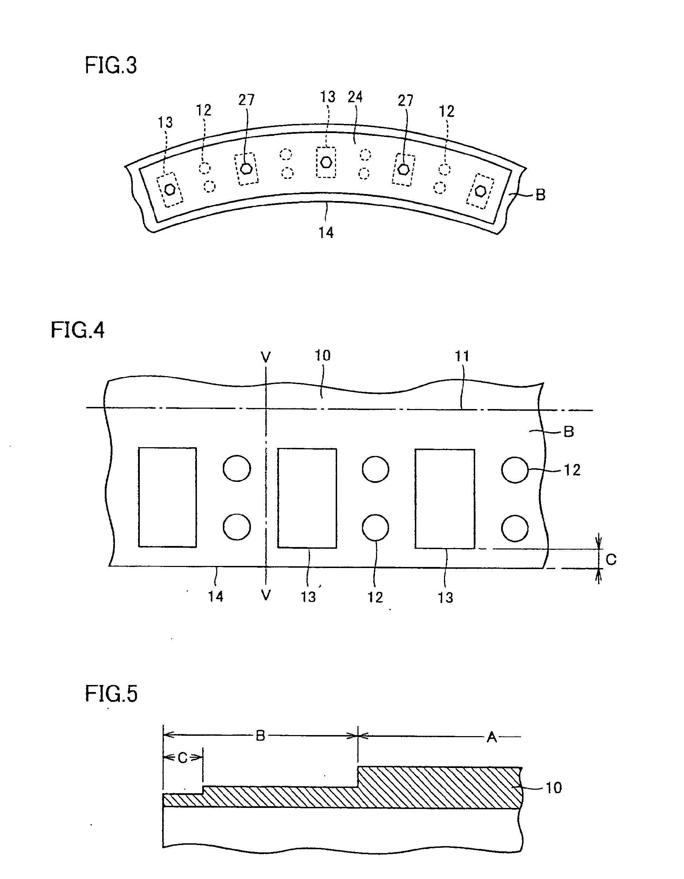

Fig. 4 shows details of the bent portion B of cylindrical jacket 10. Referring to the bent portion B, it can be seen that there are positioning holes 12 for fixing the mounting position of jacket 10, and rectangular punched holes 13 for absorbing creases at the bent portion, provided at positions apart from the edge 14 of the jacket.

There are a plurality of punched holes 13 provided at equal interval along the circumferential direction of jacket 10. Two positioning holes 12 are formed along the radial direction of bent portion B, and a plurality of pairs of positioning holes 12 are provided at equal interval along the circumferential direction of jacket 10.

In the embodiment shown, punched holes 13 and positioning holes 12 are positioned alternately along the circumferential direction. Further, punched hole 13 has a relatively large area in order to absorb crease at the bent portion of jacket 10.

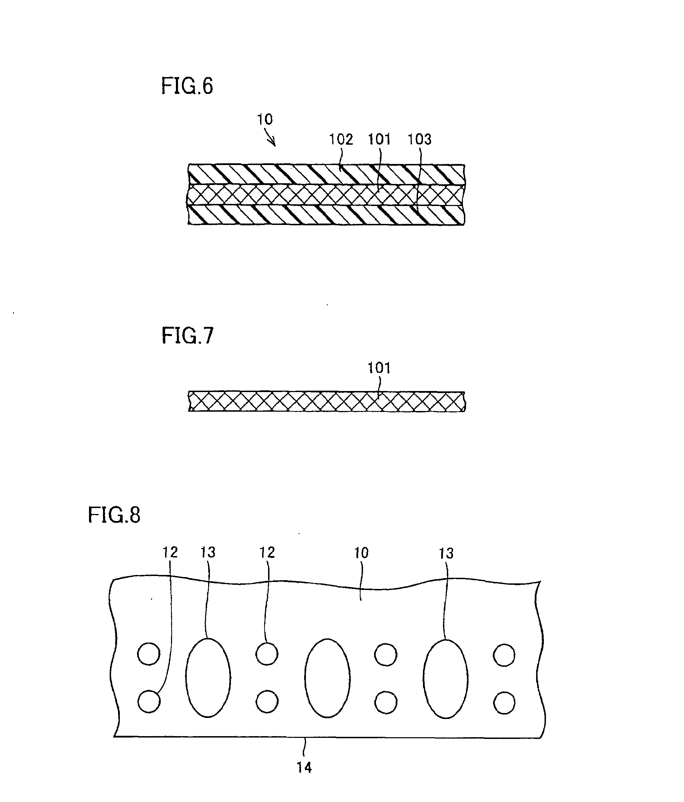

Fig. 5 is a cross section taken along the line V-V of Fig. 4, showing variation in thickness of cylindrical jacket 10. As is apparent from this figure, in order to facilitate bending of opposing ends of cylindrical jacket 10, thickness of bent portion B is made smaller than the thickness of cylindrical portion A which is not bent. Further, thickness of an edge zone C from edge 14 to punched hole 13 of jacket 10 is made smaller than the thickness of the remaining bent portion B. The crease generated at bent portion B is absorbed to some extent by punched hole 13, while a crease in edge zone C remains. Even when the crease is left in the edge zone C, influence on the fixing operation or sealing property is prevented when the thickness of this portion is reduced.

In place of or in addition to reducing the thickness, the bent portion B may be made softer than the cylindrical portion A, and the edge zone C may be made softer than the remaining bent portion B.

Fig. 6 shows a cross sectional structure of cylindrical jacket 10. Jacket 10 is formed of a multi-woven foundation fabric 101 impregnated with and covered by urethane resin 102, 103 from front and rear sides. In order to reduce the thickness of bent portion B to be smaller than cylindrical portion A of jacket 10 and to make softer the bent portion, the resin layers 102 and 103 on the front and rear sides may be made thinner by abrading. In order to make edge zone C of jacket 10 thinnest and softest, the resin layers on the front and rear sides may be fully removed by abrading, to leave only the foundation fabric layer 101 impregnated with resin, as shown in Fig. 7, for example.

A foundation fabric impregnated with and covered by resin is used as the material of cylindrical jacket 10 in order to suppress air leak and to prevent oil leak. In the embodiment shown, both surfaces of the foundation fabric are covered by resin. However, only one surface may be covered by resin. In place of the foundation fabric, a net or unwoven reinforcing thread may be used.

Figs. 2 and 3 show a state where cylindrical jacket 10 is already mounted on the press roll. As can be seen, press roll 10 includes a support shaft 21, a disk 22 rotatably supported on support shaft 21 with a bearing 23 interposed, and a fixing plate 24 for pressing from above the bent portion B of cylindrical jacket 10.

Cylindrical jacket 10 is mounted with end portion B bent radially inward along the side surface of disk 22. Fixing pins 26 are attached to the side surface of disk 22, and by fitting fixing pins 26 in positioning holes 12 of jacket 10, the position of jacket 10 is fixed.

The bent portion B of jacket 10 is attached to the side surface of disk 22 and, thereafter, fixing plate 24 is fixed on disk 22 by using a bolt 27. Bolt 27 passes through punched hole 13 of jacket 10. At a position on the side surface of disk 22 which is positioned outer than the positioning hole 12 and punched hole 13 of the mounted jacket 10 in the radial direction, a seal member 25 is mounted. Fixing plate 24 is adapted to exhibit satisfactory sealing property, as it presses the bent portion B of jacket 10 onto seal member 25.

As the cylindrical jacket 10 is huge, considerable manpower is necessary when it is mounted on the press roll. At that time, efficient drawing operation is possible when ropes are passed through punched holes 13 of jacket 10. As the edge zone C from the edge to the punched hole 13 of jacket 10 extends continuously without interruption along the circumferential direction, it has sufficient strength, and therefore it is not easily torn even when excessive force is applied from the rope. Even if the portion of punched hole 13 is torn and broken, the positioning hole 12 is intact, and therefore there is no problem in positioning and fixing the cylindrical jacket 10.

When cylindrical jacket 10 is mounted, positional deviation of the jacket is adjusted frequently by manual operation. At that time, it is possible for the operator to hold the edge zone C of the jacket, inserting his/her hand to the punched hole 13. Therefore, positional deviation can be efficiently adjusted.

When opposing ends of cylindrical jacket 10 are bent, creases are generated at bent portion B. As the creases can be absorbed to some extent by punched holes 13, there is no problem in the fixing operation or sealing property of jacket 10.

Turning to the manufacturing process of cylindrical jacket 10, both the punched hole 13 and the positioning hole 12 can be formed by punching process using punching blade. Therefore, the manufacturing process is simplified and the time necessary for the processing can be reduced.

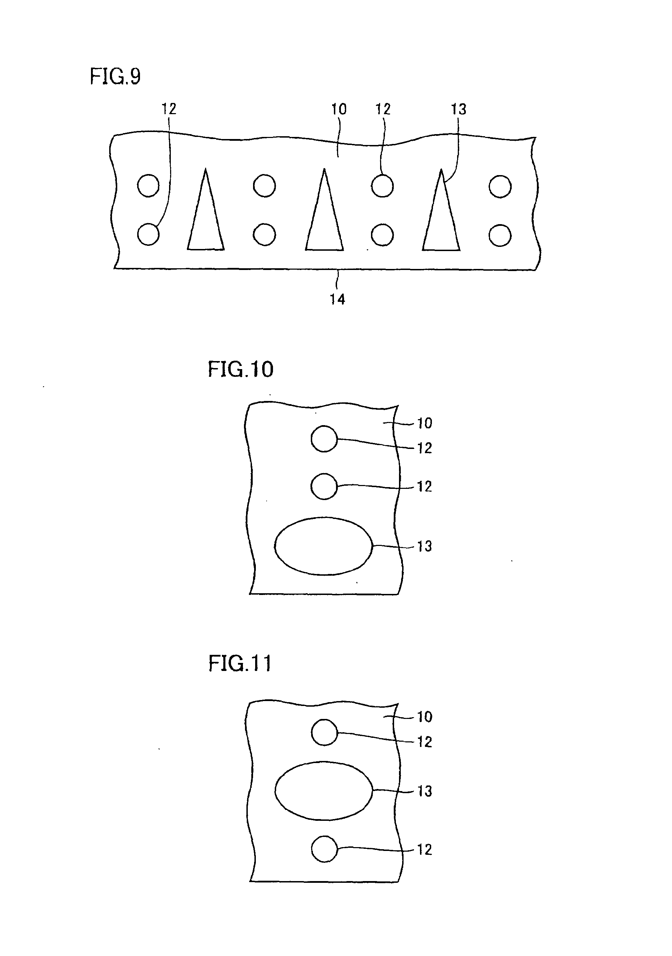

Figs. 8 to 11 represent other examples of the punched hole and positioning hole patterns. In the example shown in Fig. 8, punched hole 13 has an elliptical shape. In the example shown in Fig. 9, the punched hole 13 has a triangular shape. In the example shown in Fig. 10, the punched hole 13 is positioned inner than the positioning hole 12 along the radial direction, at the bent portion of the jacket. In the example shown in Fig. 11, punched hole 13 is positioned between two positioning holes 12 that are positioned apart from each other in the radial direction.

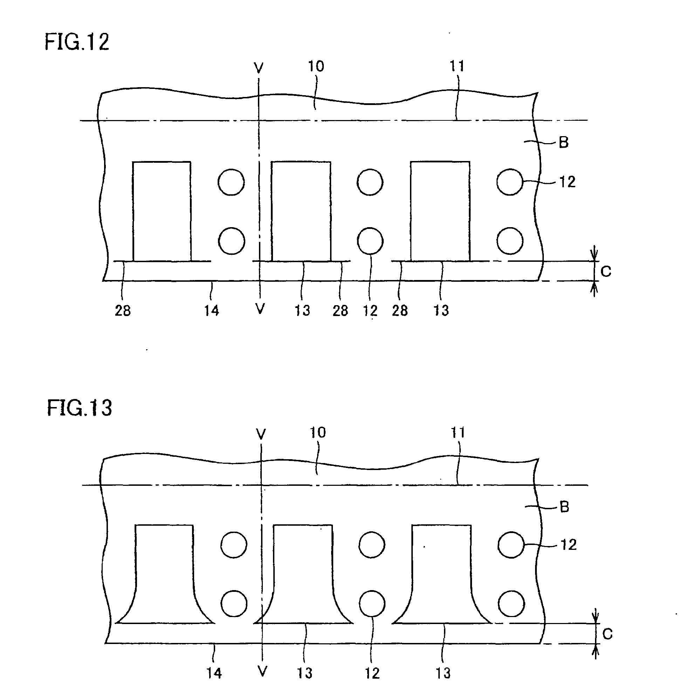

Figs. 12 and 13 represent other examples of patterns of punched hole 13 and positioning hole 12. In the example shown in Fig. 12, a slit 28 extending along the circumferential direction of the jacket is provided on the side of jacket edge of punched hole 13. In the example shown in Fig. 13, the portion on the jacket edge side of punched hole 13 is extended wider in the circumferential direction of the jacket.

When slit 28 is provided extending in the circumferential direction of the jacket on the side of jacket edge portion of punched hole 13, or when the portion of punched hole 13 on the side of jacket edge is made wider in the circumferential direction of the jacket, waving of edge zone C when the end portion of cylindrical jacket is bent can be suppressed, and hence it becomes easier to fit the fixing pin 26 in the positioning hole 12 of jacket 10.

While the embodiments of the present invention are described with reference to drawings, the embodiments disclosed above are only illustrative. The scope of the present invention is indicated by the description of the claims and is intended to include the meaning equivalent to the claims and all modifications and variations within the scope.

### Industrial Applicability

The present invention can be effectively applicable to the cylindrical jacket mounted on an outer circumferential surface of the shoe press roll for a shoe press apparatus of a paper making machine for compressing and removing water from a web of fiber material.

## Claims

1. A cylindrical jacket (10) for a shoe press roll used with opposing end portions bent radially inward, **characterized in that** at a position of the bent portion (B) of the opposing ends and apart from an edge, a positioning hole (12) for fixing fastening position of the jacket (10) and a punched hole (13) for absorbing a crease at the bent portion (B) are provided.

2. The cylindrical jacket (10) according to claim 1, wherein the thickness of the bent portion (B) of said jacket (10) is smaller than thickness of a cylindrical portion (A) not bent.

3. The cylindrical jacket (10) according to claim 1, wherein the bent portion (B) of said jacket (10) is softer than the cylindrical portion (A) not bent.

4. The cylindrical jacket (10) according to claim 1, wherein at the bent portion (B) of said jacket (10), thickness of an edge zone (C) from the edge to said punched hole (13) is smaller than other portions.

5. The cylindrical jacket (10) according to claim 1, wherein at the bent portion (B) of said jacket (10), the edge zone (C) from the edge to said punched hole (13) is softer than other portions.

6. The cylindrical jacket (10) according to claim 1, wherein a plurality of said punched holes (13) are provided at equal interval along a circumferential direction of said jacket (10).

7. The cylindrical jacket (10) according to claim 6, wherein a plurality of said positioning holes (12) are provided at equal interval along the circumferential direction of said jacket (10) ; and
said punched holes (13) and said positioning holes(12) are positioned alternately along the circumferential direction.

8. The cylindrical jacket (10) according to claim 1, wherein said punched hole (13) has a slit (28) extending in the circumferential direction of the jacket (10) on the side of the edge portion of said jacket(10).

9. The cylindrical jacket (10) according to claim 1, wherein said punched hole (13) is extended, on the side of the edge portion of the jacket (10), to be wider in the circumferential direction of said jacket(10).
